# FASCICULE DE BREVET EUROPEEN

(11) **EP 1 282 753 B1**
(45) Date de publication et mention de la délivrance du brevet: **13.08.2003**
(21) Numéro de dépôt: 01925621.3
(22) Date de dépôt: 11.04.2001
(51) Int. Cl.: E04F 15/04, E04F 15/02, E04F 13/08, F16B 5/00

(54) **DISPOSITIF D'ASSEMBLAGE DES BORDS LONGITUDINAUX DE PANNEAUX, LATTES OU LAMBRIS, A REPARTITION DE FORCES**
BEFESTIGUNGSVORRICHTUNG FÜR DIE LÄNGSRÄNDER VON PLATTEN, LATTEN ODER WANDVERKLEIDUNGEN MIT KRAFTVERTEILUNG
DEVICE FOR ASSEMBLING LONGITUDINAL EDGES OF PANELS, LATHS OR WAINSCOTS, WITH FORCE DISTRIBUTION

(30) Priorité: 15.05.2000 FR 0006163; 10.07.2000 FR 0008987; 07.08.2000 FR 0010402; 08.01.2001 FR 0100186; 30.01.2001 FR 0101256
(43) Date de publication de la demande: 12.02.2003
(73) Titulaire: Espace Production Internationale (Société Anonyme), 67520 Marlenheim (FR)
(72) Inventeur: BECKER, Arnaud, F-67170 Brumath (FR)
(74) Mandataire: Nuss, Pierre
(86) Numéro de dépôt international: FR0101119
(87) Numéro de publication internationale: WO01088307

(56) Documents cités:
- WO-A-00/47841
- DE-A- 3 913 383
- DE-A- 4 130 115
- GB-A- 1 361 805

## Description

La présente invention concerne le domaine du bâtiment, en particulier des revêtements de sols, de murs ou de plafonds, notamment en forme de panneaux, de lattes ou de lambris en différents matériaux, tels que le bois, les matériaux stratifiés, les matériaux synthétiques..., et a pour objet un dispositif d'assemblage des bords longitudinaux de tels panneaux, lattes ou lambris, à répartition de forces.

Actuellement, les éléments de revêtements de sols, de murs ou de plafonds se présentent généralement sous forme de panneaux, de lattes ou de lambris réalisés en différents matériaux, tels que du bois massif, des particules comprimées pourvues d'un revêtement synthétique ou en bois massif ou entièrement en matériaux synthétiques présentant une face apparente texturée.

Ces différents éléments sont généralement assemblés entre eux par des moyens connus du type rainures et languettes, deux côtés adjacents de ces éléments étant, par exemple, pourvus d'une languette destinée à coopérer avec des rainures prévues sur deux côtés correspondants d'éléments correspondants. Ainsi, chaque élément présente deux languettes sur deux côtés adjacents, les deux autres côtés étant munis de rainures.

Ces moyens d'assemblage permettent généralement de répondre correctement aux exigences de liaison des éléments entre eux et de mise à niveau mutuelle de ces éléments mais, nécessitent, pour le maintien de l'assemblage et d'un jointoiement parfait, la mise en oeuvre de colle ou encore de moyens d'agrippage de la face inférieure et de fixation de celle-ci sur des tasseaux ou analogues.

Cependant, une fixation sur tasseau conduit inévitablement à la création d'un vide sous les éléments de revêtement, ce qui est souvent incompatible avec l'effet recherché, à savoir par exemple pour la pose d'un revêtement de sols dénommé parquet flottant. En effet, dans un tel cas, les éléments de revêtements doivent être disposés directement sur une couche de chape ou analogue, éventuellement avec interposition d'un élément d'isolation phonique et/ou thermique. Dans un tel cas, il est forcément nécessaire de réaliser un collage des différents éléments entre eux au niveau de leurs jonctions longitudinale et latérale par rainure et languette.

Pour obvier à ces inconvénients, il a été proposé de munir les panneaux, lattes ou lambris, près de leur moyen d'assemblage à rainure et languette équipant leurs bords longitudinaux, d'un dispositif mécanique améliorant la qualité dudit assemblage par création d'un moyen anti-déboîtement en position d'assemblage, c'est-à-dire lorsque deux éléments successifs sont assemblés à rainure et languette et sont disposés à plat. Ce dispositif mécanique permet, en outre, dans la position d'assemblage à plat, un déplacement suivant l'axe longitudinal des éléments, afin de favoriser l'emboîtement de leurs languettes d'extrémité dans la rainure d'extrémité correspondante de l'élément adjacent.

De tels. dispositifs mécaniques sont essentiellement de deux types, à savoir mettant en oeuvre des parties mécaniques complémentaires de verrouillage, ou munis d'une partie intégrée de verrouillage et sont connus par EP-A-0 877 130, EP-A-0 855484, EP-A-0 969 164, EP-A-0 969 163, WO-A 99/66152, WO-A 99/66151, WO-A 98/24995, WO-A 98/24994 et WO-A 97/4783.

Les parties mécaniques complémentaires sont, soit des profilés à section en forme de crochet, soit des crochets uniformément répartis sur toute la longueur des éléments et coopérant avec des rainures de forme correspondante prévues dans les bords desdits éléments.

De tels éléments permettent, certes, une liaison correcte entre les panneaux, lattes ou lambris, mais nécessitent des manoeuvres de pose bien spécifiques, à savoir un enclenchement des éléments de liaison dans une position d'inclinaison des panneaux, lattes ou lambris les uns par rapport aux autres, puis une remise en position horizontale de ces derniers en vue de leur enclenchement latéral, soit une disposition préalable des profilés de liaison à section en forme de crochets, sous le bord de l'un des panneaux, lattes ou lambris et l'enclenchement de l'autre extrémité de ces profilés sous le bord correspondant des panneaux, lattes ou lambris adjacents, l'enclenchement latéral étant réalisé après cette liaison mécanique le long des bords longitudinaux.

Ces dispositifs de liaison mécanique complémentaire connus présentent, cependant, l'inconvénient d'être d'une constitution relativement complexe mettant simultanément en oeuvre des ensembles rainure et languette et un moyen de maintien mécanique en position de service empêchant tout glissement d'un panneau, latte ou lambris par rapport à un autre perpendiculairement à leurs bords longitudinaux.

En outre, dans le cas de réalisation d'une liaison mécanique entre bords longitudinaux par l'intermédiaire de la seule coopération de forme d'éléments complémentaires faisant partie intégrante des panneaux, lattes ou lambris et usinés ensemble avec les rainures et languettes d'assemblage, il se pose, d'une part, un problème d'usinage des éléments mécaniques de liaison et, d'autre part, un problème de fiabilité dans le temps de ces éléments mécaniques de liaison. En effet, les moyens de liaison et d'assemblage connus par les documents susvisés sont essentiellement destinés à assurer un montage parfait des panneaux, lattes ou lambris avec un assemblage sans jeu au niveau de leurs joints, équivalent à un assemblage traditionnel par collage des panneaux, lattes ou lambris entre eux ou par clouage de ceux-ci sur des tasseaux de support, tout en autorisant un démontage complet en vue d'un remontage éventuel sur un autre lieu d'utilisation.

L'usinage des éléments mécaniques de liaison directement près des bords longitudinaux implique la mise en oeuvre d'outils relativement fins et extrêmement coupants, afin de permettre la réalisation des parois minces résultant forcément de l'usinage de panneaux, lattes ou lambris de très faible épaisseur. Il en résulte que les outils utilisés sont d'un prix de revient élevé et que l'usinage même entraîne des vérifications à intervalles réguliers relativement courts pour obvier aux fluctuations de dimensions découlant d'une usure relativement rapide des outils de coupe utilisés. Ces problèmes d'usinage ont pour conséquence logique un accroissement correspondant du prix de revient des panneaux, lattes ou lambris.

Par ailleurs, la réalisation des éléments mécaniques de maintien sous forme de parois relativement minces et d'éléments en saillie sur ces parois entraîne une certaine fragilité de ces éléments mécaniques qui a pour conséquence une destruction assez rapide desdits éléments lors de manoeuvres répétées d'assemblage et de démontage des panneaux, lattes ou lambris ainsi équipés. En effet, du fait de l'emboîtement des éléments mécaniques entre eux et du maintien avec un léger serrage des bords longitudinaux correspondants des panneaux, lattes ou lambris ainsi équipés, ces éléments mécaniques sont sollicités par une force de traction perpendiculaire aux bords longitudinaux, ainsi que par des forces de flexion, lors de chaque assemblage ou démontage.

Il a également été proposé, par WO-A-97/4783 de réaliser un moyen d'assemblage et de maintien sous forme d'un élément longitudinal de section transversale en arc de cercle, dont la partie femelle équipe un bord longitudinal d'un panneau, d'une latte ou d'un lambris et dont la partie mâle, en crochet, équipe le bord longitudinal opposé. Théoriquement, un tel assemblage permet simultanément un maintien parfait au niveau des joints, en position de service. Cependant, la stabilité de cet assemblage ne peut être assurée, du fait qu'une inégalité du sol ou support, en particulier sous forme d'un creux aura pour conséquence une possibilité de désemboîtement de l'assemblage, du fait qu'une reprise de charge verticale n'est pas prévue. Un tel effet est encore accentué si les lames sont posées sur un support souple d'isolation phonique et/ou thermique. En outre, une réalisation d'un tel moyen d'assemblage par usinage est totalement impossible, en particulier sur des bords de panneaux, lattes ou lambris de faible épaisseur.

Enfin, tous les dispositifs d'assemblage connus présentent l'inconvénient d'être relativement fragiles au niveau des joints, du fait que la languette de liaison entre les panneaux, lattes ou lambris est de relativement faible épaisseur et doit entièrement reprendre les efforts au niveau desdits joints et en particulier les efforts importants de cisaillement se produisant dans le cas d'une disposition au-dessus d'un vide dû à une inégalité du sol ou autre.

Par ailleurs, GB-A-1 361 805 décrit des assemblages à rainures et languettes mettant en oeuvre des plans obliques. Cependant, ces assemblages ne prévoient pas un verrouillage des panneaux entre eux, tel que prévu par la présente invention.

Le document DE-A-41 30 115 concerne un assemblage mettant en oeuvre des éléments de paroi parallèles, ces éléments étant destinés à absorber une charge sous la face inférieure, pour éviter un désassemblage de deux panneaux sous charge. Ce document ne prévoit d'aucune façon un moyen quelconque de verrouillage, tel que celui selon la présente invention.

La présente invention a pour but de pallier les inconvénients des dispositifs d'assemblage et de maintien connus à ce jour en proposant un dispositif d'assemblage des bords longitudinaux de tels panneaux, lattes ou lambris, à répartition de forces, permettant d'assurer simultanément, par coopération de forme, un jointoiement parfait et automatique des bords longitudinaux adjacents des panneaux, lattes ou lambris et un auto-serrage desdits panneaux, lattes ou lambris les uns contre les autres, le long desdits bords longitudinaux, en particulier sous charge, ainsi qu'une répartition des forces appliquées le long des joints.

A cet effet, le dispositif d'assemblage des bords longitudinaux de tels panneaux, lattes ou lambris, est défini par la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale et en coupe de deux variantes possibles du dispositif conforme à l'invention ;
les figures 2 et 3 représentent, en élévation latérale et en coupe, deux modes de réalisation d'une autre variante de réalisation de l'invention ;
la figure 4 est une vue analogue à celles des figures 2 et 3 d'une variante de réalisation de l'invention ;
la figure 5 est une vue analogue à celles des figures 2 et 3 d'une autre variante de réalisation de l'invention ;
les figures 6 à 8 sont des vues analogues à celles des figures 2 à 5 d'autres variantes de réalisation de l'invention ;
les figures 9 et 10 sont des vues analogues à celles des figures 2 à 8, à plus grande échelle, de deux autres variantes de réalisation de l'invention ;
les figures 11 à 13 sont des vues analogues à celle de la figure 10 d'autres variantes de réalisation du dispositif, et
la figure 14 est une vue analogue à celle de la figure 10 d'une autre variante de réalisation du dispositif.

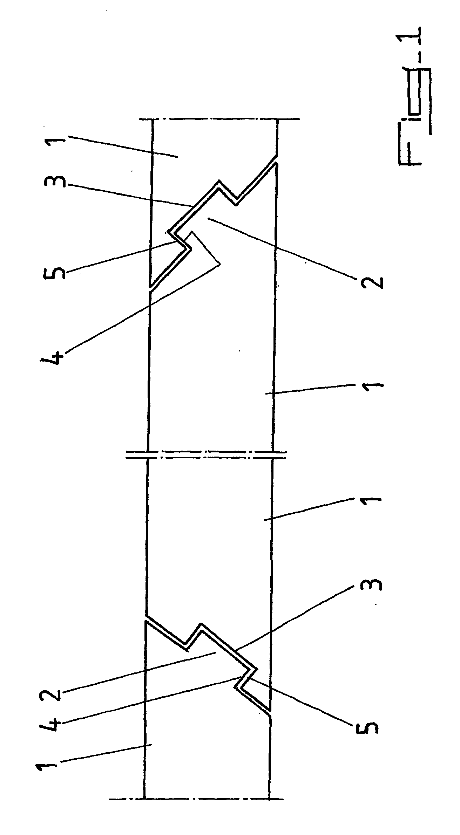

Les figures 1 à 3 des dessins annexés représentent un assemblage de deux panneaux, lattes ou lambris 1 au moyen d'un dispositif d'assemblage des bords longitudinaux, qui est constitué par au moins une partie mâle 2 équipant un bord longitudinal desdits panneaux, lattes ou lambris 1 et par au moins une partie femelle 3 de forme correspondante équipant l'autre bord longitudinal desdits panneaux, lattes ou lambris 1.

Conformément à l'invention, ce dispositif d'assemblage des bords longitudinaux de tels panneaux, lattes ou lambris 1 est à répartition de forces et les bords longitudinaux portant les parties mâle 2 et femelle 3 s'étendent suivant des plans obliques parallèles.

Le jointoiement entre deux panneaux, lattes ou lambris 1 successifs peut être effectué au droit de l'extrémité de la partie mâle, au droit des parties mâle 2 et femelle 3 ou en dehors du plan vertical comportant les parties mâle 2 et femelle 3. Un tel mode de réalisation des bords longitudinaux permet une répartition des forces appliquées au droit des joints telle que le dispositif d'assemblage proprement dit, formé par les parties mâle 2 et femelle 3, est soumis à une contrainte très faible, en particulier en ce qui concerne les sollicitations de cisaillement.

Les parties mâle 2 et femelle 3 se présentent respectivement sous forme d'une languette longitudinale inclinée sensiblement à angle droit par rapport à un premier bord longitudinal la portant et d'un logement de forme correspondante prévu dans l'autre bord longitudinal et dont l'inclinaison est complémentaire de celle de la languette équipant le premier bord longitudinal. Ainsi, comme le montre la figure 1 des dessins annexés, la languette formant la partie mâle 2 peut s'étendre vers le haut ou vers le bas et coopérer avec un logement 3 formant la partie femelle.

Selon une caractéristique de l'invention, les parties mâle 2 et femelle 3 peuvent être réalisées sous forme de simples languette et rainure de section carrée ou rectangulaire s'étendant perpendiculairement par rapport aux bords longitudinaux obliques desdits panneaux, lattes ou lambris 1 (figure 1). Ainsi, après assemblage des bords, les panneaux, lattes ou lambris 1 sont reliés entre eux sans possibilité de déplacement mutuel perpendiculairement à leurs bords longitudinaux.

Selon une caractéristique de l'invention, le dispositif d'assemblage est équipé, en outre, d'un moyen d'auto-verrouillage, d'autojointoiement et de maintien en position de service.

Ce moyen d'auto-verrouillage, d'auto-jointoiement et de maintien en position de service se présente avantageusement sous forme d'au moins un épaulement longitudinal 4 reliant au moins une arête de la languette 2, formant la partie mâle du dispositif, au bord longitudinal correspondant et coopérant avec un autre épaulement 5 prévu sur le bord correspondant délimitant la partie femelle 3 du dispositif d'assemblage (figures 1 à 3). Ainsi, à la fin de l'opération d'assemblage, l'épaulement 4, qui est relié sensiblement perpendiculairement au bord oblique du panneau, latte ou lambris et qui forme avec ce dernier sensiblement un angle droit, s'emboîte sur l'angle correspondant formé par l'épaulement 5 et le bord correspondant du panneau, latte ou lambris adjacent. L'emboîtement ainsi réalisé empêche tout démontage de deux panneaux, lattes ou lambris consécutifs par déplacement parallèlement au support. En outre, la coopération de forme ainsi réalisée permet l'obtention d'un auto-serrage de l'assemblage sous charge, les parties coopérantes étant serrées l'une contre l'autre lorsqu'une charge s'applique au niveau des joints.

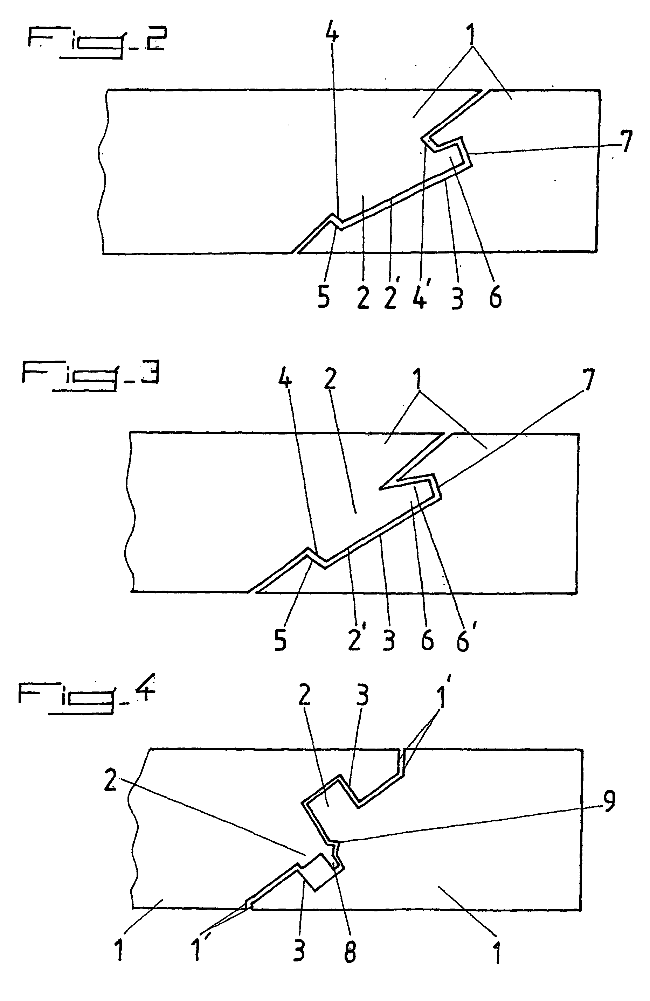

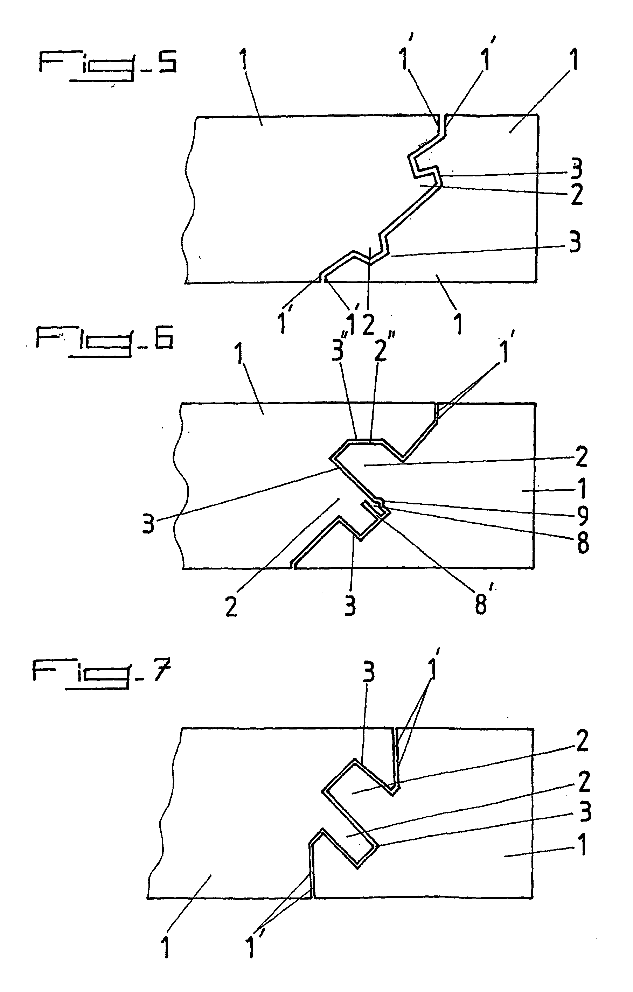

Selon une caractéristique de l'invention, la partie mâle 2 sous forme de languette longitudinale présente avantageusement, du côté 4' opposé à celui formant l'épaulement 4, une partie 6 latéralement en saillie par rapport à ce côté 4' et formant un angle aigu par rapport à la surface oblique portant la partie mâle 2, cette partie 6 latéralement en saillie coopérant avec un évidement 7 du logement formant la partie femelle 3 (figures 2 et 3). La prévision d'une telle partie en saillie 6 permet un verrouillage complémentaire de l'assemblage et évite toute possibilité de soulèvement du panneau, latte ou lambris 1 du côté comportant la languette 2 ou partie mâle.

Pour favoriser la pénétration de la partie 6 latéralement en saillie de la partie mâle 2 dans le logement formant la partie femelle 3, ladite partie 6 latéralement en saillie est sous forme d'un appendice longitudinal présentant une section transversale se rétrécissant à partir du bord longitudinal du panneau, latte ou lambris 1 en direction de l'extrémité libre dudit appendice longitudinal. La surface 2' de la partie mâle 2 reliant les côtés 4 et 4' ou le côté 4 et l'arête externe de la partie 6 latéralement en saillie de la partie mâle 2 se présente, de préférence, sous forme d'une surface plane.

Au cours de l'insertion de la partie mâle 2 dans la partie femelle 3, la partie 6 latéralement en saillie pénètre dans l'évidement correspondant 7 de la partie femelle 3 et est verrouillée finalement dans cette position, lors de l'application de l'épaulement 4 de la partie mâle 2 contre l'épaulement 5 de la partie femelle 3.

Selon une caractéristique de l'invention, la partie 6 latéralement en saillie de la partie mâle 2 est reliée au bord longitudinal portant ladite partie mâle 2 par un côté 4', sensiblement perpendiculaire à ce bord longitudinal (figure 2).

Selon une variante de réalisation de l'invention, représentée à la figure 3 du dessin annexé, la partie 6 latéralement en saillie de la partie mâle 2 peut également être reliée au bord longitudinal portant ladite partie mâle 2 directement par sa face 6' opposée à la surface 2' de la partie mâle 2, selon un angle aigu.

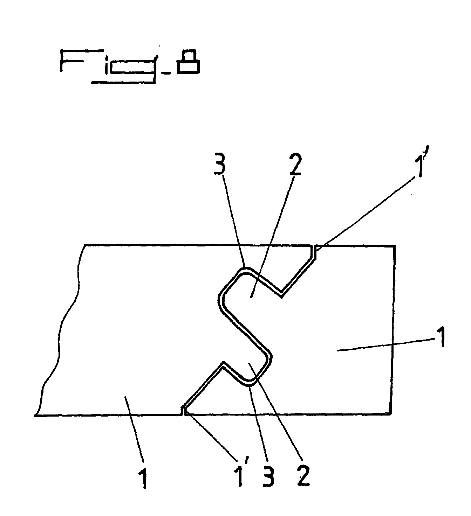

Il est également possible, selon des variantes de réalisation de l'invention représentées aux figures 4 et 6 à 8 des dessins annexés, de doubler les parties mâle 2 et femelle 3 équipant les bords longitudinaux obliques desdits panneaux, lattes ou lambris 1 et de disposer sur chaque bord longitudinal, de manière adjacente, une partie mâle 2 et une partie femelle 3 coopérant avec une partie femelle 3 et une partie mâle 2 du bord opposé, ces parties mâle 2 et femelle3 de deux bords opposés étant disposées en quinconce et réalisant un double assemblage à rainure et languette. De tels modes de réalisation permettent l'obtention d'un verrouillage en position des panneaux, lattes ou lambris 1 entre eux.

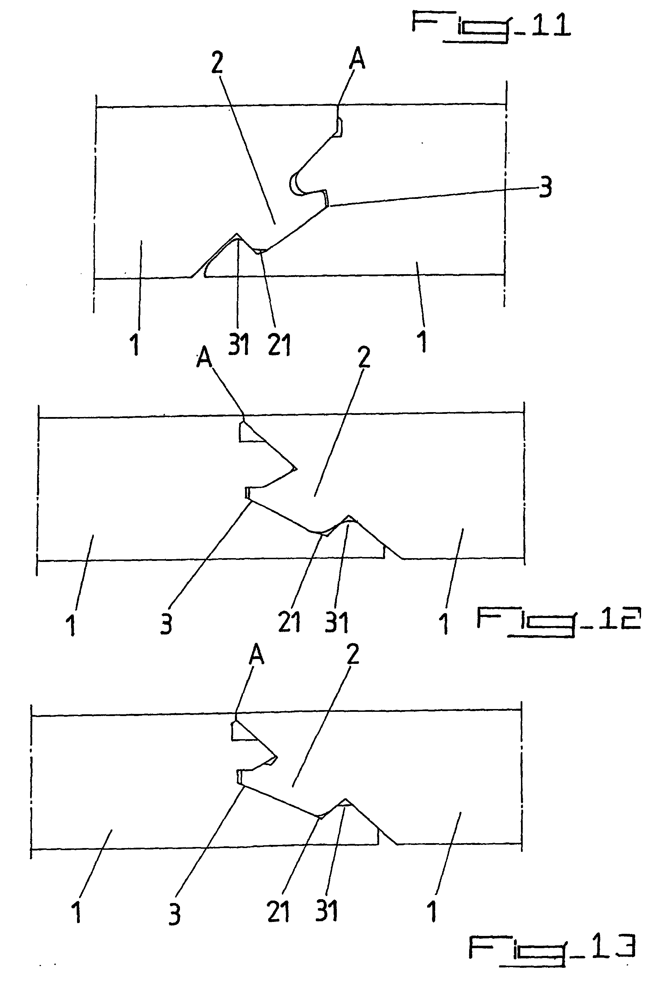

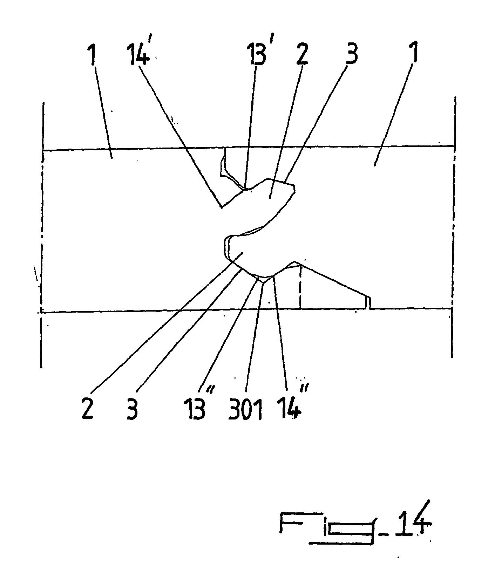

Comme le montre plus particulièrement la figure 8 des dessins annexés, les languette et rainure formant les parties mâle 2 et femelle 3 peuvent être réalisées par des éléments curvilignes mâle et femelle s'encastrant mutuellement et assurant un verrouillage en position des panneaux, lattes ou lambris 1 entre eux.

Pour permettre l'obtention d'un fini de surface parfait des panneaux, lattes ou lambris 1 au niveau des joints, en particulier pour éviter un risque de détérioration de la surface décorative, les plans obliques parallèles formant les bords longitudinaux portant les parties mâle 2 et femelle 3 sont avantageusement reliés aux surfaces supérieure et inférieure desdits panneaux, lattes ou lambris 1 par l'intermédiaire de rebords 1' de ces derniers, qui s'étendent perpendiculairement auxdites surfaces supérieure et inférieure (figures 4 à 8).

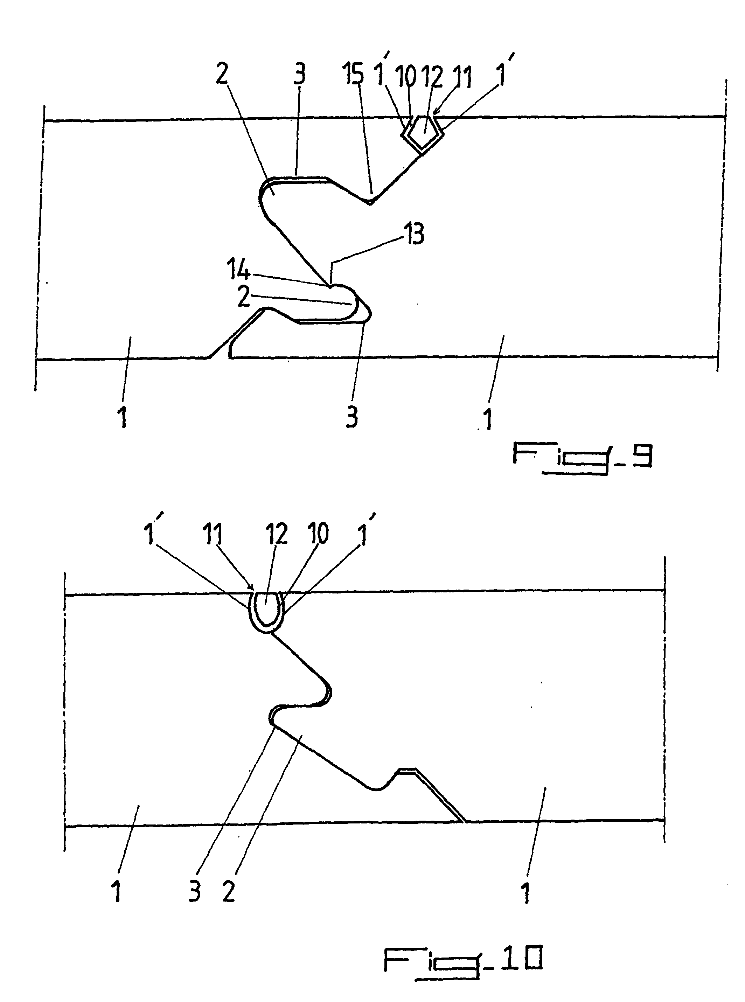

La figure 7 des dessins annexés représente une variante de réalisation de l'invention, dans laquelle les rebords 1' des surfaces supérieure et inférieure des panneaux, lattes ou lambris 1 sont directement reliés aux parties mâle 2 et femelle 3, dont les bases et les faces d'extrémité en contact mutuel s'étendent suivant des plans obliques parallèles. Ainsi, il est possible d'effectuer une liaison avec auto-jointoiement, auto-serrage et auto-verrouillage, tout en assurant la réalisation d'une continuité de la surface décorative au niveau du joint

Conformément à une autre variante de réalisation de l'invention, et comme le montrent les figures 4 et 6 des dessins annexés, au moins l'une des parties mâles 2 peut être pourvue, à son extrémité pénétrant dans la partie femelle 3 correspondante, d'un élément de verrouillage 8 par coopération de forme s'enclenchant dans un logement correspondant 9 de ladite partie femelle 3. Cet élément de verrouillage 8 peut être constitué, soit sous forme d'une languette élastique munie d'une nervure d'encliquetage (figure 4) coopérant avec le logement de la partie femelle 3, soit sous forme d'une lamelle élastique réalisée par formation d'une entaille parallèle longitudinale 8' dans la partie mâle 2, cette lamelle étant pourvue de la nervure d'encliquetage coopérant avec le logement 9 de la partie femelle 3 (figure 6). Un tel élément de verrouillage permet de parfaire l'enclenchement du dispositif d'assemblage entre les panneaux, lattes ou lambris 1 lors de l'opération finale d'assemblage tout en évitant une destruction par vieillissement à la suite de manoeuvres répétées de montage et de démontage, du fait de l'élasticité de l'élément 8.

Selon une autre caractéristique de l'invention, représentée à la figure 6 des dessins annexés, au moins une arête 2" d'une partie mâle 2 et l'angle 3" correspondant de la partie femelle coopérante 3 sont avantageusement coupés par une surface plane s'étendant parallèlement aux surfaces supérieure et inférieure des panneaux, lattes ou lambris 1. La prévision de telles surfaces d'appui horizontales, par exemple par rapport à la surface de marche d'un plancher, permet l'absorption des forces de cisaillement dues aux charges verticales. En outre, ces surfaces garantissent un affleurement parfait de la surface supérieure des panneaux, lattes ou lambris 1 au niveau des joints d'assemblage.

La figure 5 des dessins annexés représente une autre variante de réalisation de l'invention, dans laquelle le dispositif d'assemblage est complété par un deuxième ensemble de parties mâle 2 et femelle 3 formant simultanément un moyen d'auto-verrouillage, d'auto-jointoiement et de maintien en position de service.

Selon une caractéristique de l'invention, non représentée aux dessins annexés, au moins l'un des ensembles de parties mâle 2 et femelle 3 présente des formes arrondies. Ainsi, par exemple, l'ensemble formant simultanément le moyen d'auto-verrouillage, d'auto-jointoiement et de maintien en position de service peut se présenter sous forme, d'une part, d'un appendice sensiblement demi-cylindrique et, d'autre part, d'un évidemment de section correspondante.

Les parties mâles 2 et femelles 3 équipant les bords longitudinaux des panneaux, lattes ou lambris 1 présentent, de préférence, des parois latérales inclinées dans le sens d'un rétrécissement de la section à partir de la base vers le sommet des parties mâles et d'un évasement de la base vers l'ouverture des parties femelles. Ainsi, lors du montage ou du démontage des panneaux, lattes ou lambris 1, l'insertion des parties mâles 2 dans les parties femelles 3 est facilitée, cette insertion s'effectuant par présentation du panneau, latte ou lambris 1 à mettre en place suivant une inclinaison plus ou moins importante par rapport à l'horizontale et au panneau, latte ou lambris 1 déjà en place.

Par ailleurs, afin de favoriser encore l'insertion des parties mâles 2 dans les parties femelles 3 correspondantes, les arêtes de liaison des angles délimitant lesdites parties mâles 2, ainsi que des angles délimitant les logements formant les parties femelles 3, sont avantageusement légèrement arrondies ou chanfreinées.

Ainsi, le début de la pénétration d'une partie mâle 2 dans une partie femelle 3 est facilité, alors que la suite de l'assemblage des bords s'effectue par contact intime des surfaces correspondantes, de sorte que l'assemblage est réalisé de manière auto-verrouillante, auto-jointante et auto-serrante.

Les figures 9 et 10 des dessins annexés représentent, à plus grande échelle, d'autres variantes de réalisation de l'invention, dans lesquelles les rebords 1' reliant les plans obliques parallèles formant les bords longitudinaux, portant les parties mâle 2 et femelle 3 à la surface supérieure des panneaux, lattes ou lambris 1 et s'étendant perpendiculairement à ladite surface supérieure, sont avantageusement pourvus chacun d'un logement longitudinal 10 partiellement ouvert le long de ladite surface supérieure et délimitant chacun avec le logement 10 du bord longitudinal du panneau, latte ou lambris 1 voisin une gorge 11 de réception d'un élément de joint 12, sous forme d'un mastic, d'une baguette ou analogue.

De préférence, les logements 10 des bords longitudinaux des panneaux, lattes ou lambris 1 présentent une forme évasée vers l'intérieur desdits panneaux, lattes ou lambris 1 permettant l'obtention de gorges 11 s'évasant vers l'intérieur du montage de panneaux, lattes ou lambris 1 assemblés. Un tel mode de réalisation permet de disposer entre les panneaux, lattes ou lambris 1, lors de leur montage, des éléments de joint 12 servant d'éléments décoratifs ou de jointoiement. En outre, un évasement des logements 11 permet une insertion par clippage d'éléments de jointoiement déformables élastiquement et leur maintien en position de service. Ainsi, il est possible de réaliser un assemblage de panneaux ayant une apparence de carreaux céramiques ou autres, les joints entre lesdits carreaux étant formés par les éléments 12. Cette réalisation des logements longitudinaux 10 est possible du fait de la prévision des plans obliques, qui permettent l'obtention d'épaisseurs de matière suffisantes pour subir l'usinage correspondant, qui n'est pas possible en présence de plans de joint perpendiculaires aux surfaces supérieure et inférieure.

Selon une autre caractéristique de l'invention et comme le montre la figure 9, au moins une partie mâle 2 de l'un des plans obliques parallèles formant les bords longitudinaux des panneaux, lattes ou lambris 1 est pourvu d'un moyen 13 de verrouillage sous forme d'une rainure longitudinale, qui coopère avec un moyen de forme coopérante 14 de la partie femelle 3 correspondante, constitué par une nervure longitudinale, l'assemblage de l'ensemble étant effectué par déformation plastique des moyens 13 et 14. Un tel mode de réalisation permet un verrouillage complémentaire en position, par clippage, entraînant une amélioration de l'auto-serrage et de l'auto-jointoiement déjà conféré par l'assemblage à rainures et languettes multiples.

De plus, au moins une paire de logement 3 - partie mâle 2 de l'assemblage peut être complétée par au moins un moyen de verrouillage complémentaire 15 sous forme d'une saillie longitudinale et d'un logement correspondant.

En outre, la figure 9 représente une autre caractéristique de l'invention, selon laquelle les extrémités des parties mâles 2 et le fond des logements formant les parties femelles 3 présentent une face parallèle à celle des faces supérieure et inférieure des panneaux, lattes ou lambris 1, les logements formant les parties femelles 3 présentant une profondeur légèrement supérieure à la hauteur des parties mâles 2. Ainsi, il subsiste en position d'assemblage un jeu de fonctionnement permettant d'absorber les charges au droit des joints et d'assurer l'auto-jointoiement et l'auto-serrage en trois points différents, au niveau des parties mâles 2 et au niveau du dispositif de verrouillage 15.

Selon une autre caractéristique de l'invention, les parties mâles 2 d'un même plan oblique s'étendent dans des directions opposées.

Les figures 11 à 13 représentent d'autres variantes de réalisation de l'invention, dans lesquelles les arêtes d'entrée des logements formant la ou les parties femelles 3 d'au moins l'un des plans obliques parallèles formant les bords longitudinaux des panneaux, lattes ou lambris 1, ainsi que les arêtes correspondantes de la ou des parties mâles 2 de l'autre plan oblique sont avantageusement pourvues chacune d'une rampe inclinée longitudinale 31, 21 formant respectivement un élargissement en entonnoir à l'entrée de la ou des parties femelles 3 et un évasement partant du sommet de la ou des parties mâles 2, ces rampes inclinées longitudinales 31 et 21 étant prévues sur les arêtes des parties femelles 3 et mâles 2 correspondantes les plus éloignées du point de pivotement d'assemblage A entre deux panneaux, lattes ou lambris 1.

La prévision de ces rampes 31 et 21 permet de favoriser une pénétration facilitée des parties mâles 2 dans les parties femelles 3, avec exercice d'un effort minimal d'assemblage et donc d'un très faible effort sur les parois des logements ou parties femelles 3, de sorte que les bords desdites parties femelles 3 subissent une déformation réduite, voire nulle, qui permet d'éviter les risques de cassure qui entraîneraient une mise au rebut.

Comme le montrent plus particulièrement les figures 12 et 13 des dessins annexés, les extrémités de la ou des rampes 21 prévues sur les parties mâles 2 présentent, par rapport au point de pivotement d'assemblage A entre deux panneaux, lattes ou lambris 1 une distance ou un rayon croissant à partir du sommet desdites parties mâles 2 vers leur pied de liaison au bord longitudinal correspondant. Simultanément, les extrémités de la ou des rampes 31 prévues à l'entrée de la ou des parties femelles 3 présentent, par rapport au point de pivotement d'assemblage A entre deux panneaux, lattes ou lambris 1 une distance ou un rayon décroissant à partir de l'entrée desdites parties femelles 3 vers le fond de celles-ci.

Un tel mode de réalisation permet une insertion facilitée de la partie mâle 2 dans la partie femelle 3, tout en assurant le maintien et le verrouillage en position de montage des panneaux, lattes ou lambris 1. En outre, cette prévision des rampes 21 et 31 permet également d'éviter une déformation importante des bords des logements formant les parties femelles 3 et donc leur destruction.

La figure 13 des dessins annexés représente une autre variante de réalisation de l'invention, dans laquelle les plans obliques formant les bords longitudinaux des panneaux, lattes ou lambris 1 sont subdivisés en au moins deux portions de plan, parallèles ou non, décalées et raccordées chacune à une arête de liaison d'une partie mâle 2 ou d'une partie femelle 3. Ainsi, il est possible d'augmenter les sections d'enclenchement des parties mâle 2 et femelle 3, de sorte que leur résistance à l'arrachement est notablement améliorée.

La figure 14 des dessins annexés représente une autre variante de réalisation de l'invention, dans laquelle deux parties mâles 2 de deux plans obliques parallèles formant les bords longitudinaux des panneaux, lattes ou lambris 1 sont pourvues chacune d'un moyen 13', 13" de verrouillage, respectivement sous forme d'une rainure longitudinale 13', prévue sur la partie mâle supérieure 2, qui coopère avec un moyen de forme coopérante 14' constitué par une nervure longitudinale de la partie femelle 3 correspondante, et d'une nervure longitudinale 13", prévue sous la partie mâle inférieure 2, qui coopère avec un moyen de forme coopérante 14" constitué par une rainure longitudinale de la partie femelle 3 correspondante. Il en résulte un double verrouillage de l'assemblage ainsi réalisé.

Selon une autre caractéristique de l'invention, également représentée à la figure 14 des dessins annexés, les arêtes d'entrée des logements formant la ou les parties femelles 3 des plans obliques parallèles formant les bords longitudinaux des panneaux, lattes ou lambris 1 sont avantageusement disposées dans un même plan vertical et présentent une partie de verrouillage 301 située entièrement à l'intérieur des logements 3 derrière ledit plan vertical.

Conformément à une variante de réalisation de l'invention représentée en pointillé dans la figure 14, l'arête inférieure du logement inférieur 3 peut être reliée directement par un plan vertical à la face inférieure du panneau latte ou lambris 1. Un tel mode de réalisation permet l'obtention d'un dispositif d'assemblage plus robuste, la partie inférieure du panneau, latte ou lambris 1 délimitant l'ouverture du logement inférieur 3 pouvant présenter une épaisseur relativement importante et donc une plus grande résistance mécanique.

Selon une autre variante de réalisation de l'invention non représentée aux dessins annexés, l'arête inférieure délimitant le logement inférieur 3 peut également être disposée en retrait par rapport au plan vertical passant par l'arête supérieure dudit logement 3, vers l'intérieur du panneau, latte ou lambris 1. Une telle disposition favorise notamment une introduction plus aisée de l'élément mâle ou languette 2.

Les différentes variantes de réalisation possibles suivant la figure 14 permettent un assemblage entre deux panneaux, lattes ou lambris 1 successifs qui est toujours réalisé avec un décalage entre les joints supérieur et inférieur, l'arête inférieure du logement inférieur 3 étant reliée à la face inférieure du panneau, latte ou lambris 1 par une paroi oblique ou par une paroi verticale. En outre, un tel assemblage évite toute possibilité de déboîtement accidentel. Par ailleurs, l'assemblage de tels panneaux, lattes ou lambris 1 peut facilement être réalisé par un mouvement d'insertion oblique dans une direction parallèle à l'axe de l'ouverture du logement 3. Cette insertion peut également être réalisée par un mouvement de déplacement à plat du nouveau panneau, latte ou lambris 1 avec un choc pour la fin de l'insertion par l'intermédiaire d'une cale et d'un marteau pour effectuer un léger forçage de la partie mâle ou languette 2 dans la partie femelle ou logement 3.

Dans les positions d'assemblage obtenues conformément à la présente invention et représentées aux figures 1 à 14, il apparaît clairement que la coopération des différents éléments équipant les bords latéraux adjacents de panneaux, lattes ou lambris 1 à assembler permettent de réaliser, d'une part, un positionnement parfait d'un panneau, latte ou lambris avec le suivant et le précédent et, d'autre part, un serrage et un verrouillage en position de tels panneaux, lattes ou lambris entre eux.

En outre, du fait du positionnement oblique des faces d'assemblage et du dispositif d'assemblage, toute application de force au niveau d'un joint a pour effet une transmission de l'essentiel de la force appliquée directement sur les faces obliques, alors que le dispositif d'assemblage n'est pratiquement pas chargé directement et, en particulier, n'est soumis qu'à un très faible effort de cisaillement.

L'assemblage des bords correspondants des panneaux, lattes ou lambris peut être facilement effectué par mise en correspondance de l'ouverture d'entrée de la ou des parties femelles 3 avec l'arête libre de la ou des languettes formant la ou les parties mâles 2, ce avec une légère inclinaison préalable du panneau, latte ou lambris à raccorder, cette inclinaison se rapprochant de plus en plus de l'horizontale au fur et à mesure de la mise en coopération des parties mâle 2 et femelle 3 des panneaux, lattes ou lambris 1 à assembler.

En outre, la forme des emboîtements, en particulier selon les figures 2, 5 et 9 à 14 permet de rattraper les éventuelles déformations du type gauchissement longitudinal, qui peuvent survenir dans le cas de panneaux de faible épaisseur par rapport à leur surface.

Grâce à l'invention, il est possible de réaliser des panneaux, lattes ou lambris, dont l'assemblage des bords longitudinaux permet un auto-serrage et un auto-jointoiement desdits bords, ainsi qu'un auto-blocage desdits panneaux, lattes ou lambris en position montée, tout en autorisant un déplacement longitudinal desdits panneaux, lattes ou lambris 1 en vue de leur assemblage par rainure et languette le long de leurs bords latéraux.

En outre, l'invention permet une reprise et une répartition optimale des charges, telles que les forces résultantes s'appliquent principalement sur les bords longitudinaux des panneaux, lattes ou lambris et que le moyen d'assemblage proprement dit n'est pratiquement soumis à aucun effort susceptible de conduire à sa destruction par fatigue.

Par ailleurs, du fait de la réalisation des bords latéraux des panneaux, lattes ou lambris 1 sous forme de plans obliques, il est possible, pour une épaisseur prédéterminée desdits panneaux, lattes ou lambris, de dimensionner le dispositif d'assemblage de manière plus importante que dans le cas d'une réalisation verticale desdits bords longitudinaux. Il en résulte que les sections des éléments du dispositif d'assemblage sont plus importantes et donc plus résistantes.

De plus, dans le mode de réalisation suivant les figures 4 et 6 à 9, l'assemblage des bords correspondants des panneaux, lattes ou lambris 1 peut être facilement effectué par mise en correspondance des parties mâles 2 et femelles 3 par le haut en un mouvement de déplacement oblique parallèle à l'angle que forment les axes desdites parties 2 et 3 par rapport bords latéraux des panneaux, lattes ou lambris 1.

Les panneaux, lattes ou lambris ainsi réalisés peuvent être usinés de manière particulièrement simple avec un outillage courant et avec une nécessité de réglage intermédiaire de l'outillage relativement réduite.

Il en résulte que les panneaux, lattes ou lambris ainsi réalisés sont d'un prix de revient moindre que ceux connus actuellement, tout en offrant une résistance accrue au niveau des joints.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, défini par le contenu des revendications.

## Revendications

1. Dispositif d'assemblage des bords longitudinaux de panneaux, lattes ou lambris (1), constitué par au moins une partie mâle (2) équipant un bord longitudinal desdits panneaux, lattes ou lambris (1) et par au moins une partie femelle (3) de forme correspondante équipant l'autre bord longitudinal desdits panneaux, lattes ou lambris (1), **caractérisé en ce qu'**il est à répartition de forces, **en ce que** les bords longitudinaux portant les parties mâle (2) et femelle (3) s'étendent suivant des plans obliques parallèles, **en ce qu'**il est équipé d'un moyen d'auto-verrouillage, d'autojointoiement et de maintien en position de service se présentant sous forme d'au moins un épaulement longitudinal (4) reliant au moins une arête de la languette (2), formant la partie mâle du dispositif, au bord longitudinal correspondant et coopérant avec un autre épaulement (5) prévu sur le bord correspondant délimitant la partie femelle (3) du dispositif d'assemblage et **en ce que** la partie mâle (2) sous forme de languette longitudinale présente, du côté (4') opposé à celui formant l'épaulement (4), une partie (6) latéralement en saillie par rapport à ce côté (4') et formant un angle aigu par rapport à la surface oblique portant la partie mâle (2), cette partie (6) latéralement en saillie coopérant avec un évidement (7) du logement formant la partie femelle (3).

2. Dispositif, suivant la revendication 1, **caractérisé en ce que** le jointoiement entre deux panneaux, lattes ou lambris (1) successifs est effectué au droit de l'extrémité de la partie mâle.

3. Dispositif, suivant la revendication 1, **caractérisé en ce que** le jointoiement entre deux panneaux, lattes ou lambris (1) successifs est effectué au droit des parties mâle (2) et femelle (3).

4. Dispositif, suivant la revendication 1, **caractérisé en ce que** le jointoiement entre deux panneaux, lattes ou lambris (1) successifs est effectué en dehors du plan vertical comportant les parties mâle (2) et femelle (3).

5. Dispositif, suivant la revendication 1, **caractérisé en ce que** les parties mâle (2) et femelle (3) se présentent respectivement sous forme d'une languette longitudinale inclinée sensiblement à angle droit par rapport à un premier bord longitudinal la portant et d'un logement de forme correspondante prévu dans l'autre bord longitudinal et dont l'inclinaison est complémentaire de celle de la languette équipant le premier bord longitudinal.

6. Dispositif, suivant la revendication 1, **caractérisé en ce que** la languette formant la partie mâle (2) s'étend vers le haut ou vers le bas et coopère avec un logement (3) formant la partie femelle.

7. Dispositif, suivant l'une quelconque des revendications 1 et 5, **caractérisé en ce que** les parties mâle (2) et femelle (3) sont réalisées sous forme de simples languette et rainure de section carrée ou rectangulaire s'étendant perpendiculairement par rapport aux bords longitudinaux obliques des panneaux, lattes ou lambris (1).

8. Dispositif, suivant la revendication 1, **caractérisé en ce que** la partie (6) latéralement en saillie de la partie mâle (2) est sous forme d'un appendice longitudinal présentant une section transversale se rétrécissant à partir du bord longitudinal du panneau, latte ou lambris (1) en direction de l'extrémité libre dudit appendice longitudinal.

9. Dispositif, suivant l'une quelconque des revendications 1 et 6, **caractérisé en ce que** la surface (2') de la partie mâle (2) reliant les côtés (4 et 4') ou le côté (4) et l'arête externe de la partie (6) latéralement en saillie de la partie mâle (2) se présente, de préférence, sous forme d'une surface plane.

10. Dispositif, suivant l'une quelconque des revendications 1, 8 et 9, **caractérisé en ce que** la partie (6) latéralement en saillie de la partie mâle (2) est reliée au bord longitudinal portant ladite partie mâle (2) par un côté (4') sensiblement perpendiculaire à ce bord longitudinal.

11. Dispositif, suivant l'une quelconque des revendications 1 et 8 à 10, **caractérisé en ce** la partie (6) latéralement en saillie de la partie mâle (2) est reliée au bord longitudinal portant ladite partie mâle (2) directement par sa face (6') opposée à la surface (2') de la partie mâle (2), selon un angle aigu.

12. Dispositif, suivant la revendication 1, **caractérisé en ce que** les parties mâle (2) et femelle (3) sont doublées et, sur chaque bord longitudinal sont disposées, de manière adjacente, une partie mâle (2) et une partie femelle (3) coopérant avec une partie femelle (3) et une partie mâle (2) du bord opposé, ces parties mâle (2) et femelle (3) de deux bords étant disposées en quinconce et réalisant un double assemblage à rainure et languette.

13. Dispositif, suivant l'une quelconque des revendications 1 à 7 et 8 à 12, **caractérisé en ce que** les languette et rainure formant les parties mâle (2) et femelle (3) sont réalisées par des éléments curvilignes mâle et femelle s'encastrant mutuellement et assurant un verrouillage en position des panneaux, lattes ou lambris (1) entre eux.

14. Dispositif, suivant la revendication 1, **caractérisé en ce** les plans obliques parallèles formant les bords longitudinaux portant les parties mâle (2) et femelle (3) sont reliés aux surfaces supérieure et inférieure des panneaux, lattes ou lambris (1) par l'intermédiaire de rebords (1') de ces derniers, qui s'étendent perpendiculairement auxdites surfaces supérieure et inférieure.

15. Dispositif, suivant la revendication 12, **caractérisé en ce que** les rebords (1') des surfaces supérieure et inférieure des panneaux, lattes ou lambris (1) sont directement reliés aux parties mâle (2) et femelle (3), dont les bases et les faces d'extrémité en contact mutuel s'étendent suivant des plans obliques parallèles.

16. Dispositif, suivant l'une quelconque des revendications 1 à 5, 7 et 8 à 14, **caractérisé en ce qu'**au moins l'une des parties mâles (2) est pourvue, à son extrémité pénétrant dans la partie femelle (3) correspondante, d'un élément de verrouillage (8) par coopération de forme s'enclenchant dans un logement correspondant (9) de ladite partie femelle. (3).

17. Dispositif, suivant la revendication 16, **caractérisé en ce** l'élément de verrouillage (8) est constitué sous forme d'une languette élastique munie d'une nervure d'encliquetage coopérant avec le logement de la partie femelle (3).

18. Dispositif, suivant la revendication 16, **caractérisé en ce** l'élément de verrouillage (8) est constitué sous forme d'une lamelle élastique réalisée par formation d'une entaille parallèle longitudinale (8') dans la partie mâle (2), cette lamelle étant pourvue de la nervure d'encliquetage coopérant avec le logement (9) de la partie femelle (3).

19. Dispositif, suivant l'une quelconque des revendications 1 à 7 et 8 à 15, **caractérisé en ce qu'**au moins une arête (2") d'une partie mâle (2) et l'angle (3") correspondant de la partie femelle coopérante (3) sont coupés par une surface plane s'étendant parallèlement aux surfaces supérieure et inférieure des panneaux, lattes ou lambris (1).

20. Dispositif, suivant l'une quelconque des revendications 1 à 7 et 12, **caractérisé en ce qu'**il est complété par un deuxième ensemble de parties mâle (2) et femelle (3) formant simultanément un moyen d'autoverrouillage, d'auto-jointoiement et de maintien en position de service.

21. Dispositif, suivant la revendication 20, **caractérisé en ce qu'**au moins l'un des ensembles de parties mâle (2) et femelle (3) présente des formes arrondies.

22. Dispositif, suivant l'une quelconque des revendications 1 à 7, 8 à 12, 14 à 16 et 20, **caractérisé en ce que** les parties mâles (2) et femelles (3) équipant les bords longitudinaux des panneaux, lattes ou lambris (1) présentent des parois latérales inclinées dans le sens d'un rétrécissement de la section à partir de la base vers le sommet des parties mâles et d'un évasement de la base vers l'ouverture des parties femelles.

23. Dispositif, suivant l'une quelconque des revendications 1 à 7, 8 à 12, 14 à 16 et 20, **caractérisé en ce que** les arêtes de liaison des angles aigus délimitant la partie mâle (2), ainsi que des angles aigus délimitant le logement formant la partie femelle (3), sont légèrement arrondies ou chanfreinées.

24. Dispositif, suivant l'une quelconque des revendications 14 et 15, **caractérisé en ce que** les rebords (1') reliant les plans obliques parallèles formant les bords longitudinaux, portant les parties mâle (2) et femelle (3) à la surface supérieure des panneaux, lattes ou lambris (1) et s'étendant perpendiculairement à ladite surface supérieure, sont pourvus chacun d'un logement longitudinal (10) partiellement ouvert le long de ladite surface supérieure et délimitant chacun avec le logement (10) du bord longitudinal du panneau, latte ou lambris (1) voisin une gorge (11) de réception d'un élément de joint (12), sous forme d'un mastic, d'une baguette ou analogue.

25. Dispositif, suivant la revendication 24, **caractérisé en ce que** les logements (10) des bords longitudinaux des panneaux, lattes ou lambris (1) présentent une forme évasée vers l'intérieur desdits panneaux, lattes ou lambris (1) permettant l'obtention de gorges (11) s'évasant vers l'intérieur du montage de panneaux, lattes ou lambris (1) assemblés.

26. Dispositif, suivant l'une quelconque des revendications 1 à 7, 12 et 13, **caractérisé en ce qu'**au moins une partie mâle (2) de l'un des plans obliques parallèles formant les bords longitudinaux des panneaux, lattes ou lambris (1) est pourvu d'un moyen (13) de verrouillage sous forme d'une rainure longitudinale, qui coopère avec un moyen de forme coopérante (14) de la partie femelle (3) correspondante, constitué par une nervure longitudinale, l'assemblage de l'ensemble étant effectué par déformation plastique des moyens de verrouillage (13 et 14).

27. Dispositif, suivant l'une quelconque des revendications 1 à 7, 12, 13 et 26, **caractérisé en ce qu'**au moins une paire de logement (3) - partie mâle (2) de l'assemblage est complétée par au moins un moyen de verrouillage complémentaire (15) sous forme d'une saillie longitudinale et d'un logement correspondant.

28. Dispositif, suivant l'une quelconque des revendications 1 à 7, 12, 19, 20, 22 et 23, **caractérisé en ce que** les extrémités des parties mâles (2) et le fond des logements formant les parties femelles (3) présentent une face parallèle à celle des faces supérieure et inférieure des panneaux, lattes ou lambris (1).

29. Dispositif, suivant l'une quelconque des revendications 12, 13, 15, 16, 19, 20, 22, 23 et 26 à 28, **caractérisé en ce que** les parties mâles (2) d'un même plan oblique s'étendent dans des directions opposées.

30. Dispositif, suivant la revendication 23, **caractérisé en ce que** les arêtes d'entrée des logements formant la ou les parties femelles (3) d'au moins l'un des plans obliques parallèles formant les bords longitudinaux des panneaux, lattes ou lambris (1), ainsi que les arêtes correspondantes de la ou des parties mâles (2) de l'autre plan oblique sont pourvues chacune d'une rampe inclinée longitudinale (31, 21) formant respectivement un élargissement en entonnoir à l'entrée de la ou des parties femelles (3) et un évasement partant du sommet de la ou des parties mâles (2), ces rampes inclinées longitudinales (31 et 21) étant prévues sur les arêtes des parties femelles (3) et mâles (2) correspondantes les plus éloignées d'un point de pivotement d'assemblage (A) entre deux panneaux, lattes ou lambris (1).

31. Dispositif, suivant la revendication 30, **caractérisé en ce que** les extrémités de la ou des rampes (21) prévues sur les parties mâles (2) présentent, par rapport au point de pivotement d'assemblage (A) entre deux panneaux, lattes ou lambris (1) une distance ou un rayon croissant à partir du sommet desdites parties mâles (2) vers leur pied de liaison au bord longitudinal correspondant.

32. Dispositif, suivant la revendication 30, **caractérisé en ce que** les extrémités de la ou des rampes (31) prévues à l'entrée de la ou des parties femelles (3) présentent, par rapport au point de pivotement d'assemblage (A) entre deux panneaux, lattes ou lambris (1) une distance ou un rayon décroissant à partir de l'entrée desdites parties femelles (3) vers le fond de celles-ci.

33. Dispositif, suivant la revendication 1, **caractérisé en ce que** les plans obliques formant les bords longitudinaux des panneaux, lattes ou lambris (1) sont subdivisés en au moins deux portions de plan, parallèles ou non, décalées et raccordées chacune à une arête de liaison d'une partie mâle (2) ou d'une partie femelle (3).

34. Dispositif, suivant l'une quelconque des revendications 1 à 7, 12, 13 et 26, **caractérisé en ce que** deux parties mâles (2) de deux plans obliques parallèles formant les bords longitudinaux des panneaux, lattes ou lambris (1) sont pourvues chacune d'un moyen (13', 13") de verrouillage, respectivement sous forme d'une rainure longitudinale (13'), prévue sur la partie mâle supérieure (2), qui coopère avec un moyen de forme coopérante (14') constitué par une nervure longitudinale de la partie femelle (3) correspondante, et d'une nervure longitudinale (13"), prévue sous la partie mâle inférieure (2), qui coopère avec un moyen de forme coopérante (14") constitué par une rainure longitudinale de la partie femelle (3) correspondante.

35. Dispositif, suivant la revendication 1, **caractérisé en ce que** les arêtes d'entrée des logements formant la ou les parties femelles (3) des plans obliques parallèles formant les bords longitudinaux des panneaux, lattes ou lambris (1) sont disposées dans un même plan vertical et présentent une partie de verrouillage (301) située entièrement à l'intérieur des logements (3) derrière ledit plan vertical.

36. Dispositif, suivant la revendication 35, **caractérisé en ce que** l'arête inférieure du logement inférieur (3) est reliée directement par un plan vertical à la face inférieure du panneau latte ou lambris (1).

37. Dispositif, suivant la revendication 1, **caractérisé en ce que** l'arête inférieure délimitant le logement inférieur (3) est disposée en retrait par rapport au plan vertical passant par l'arête supérieure dudit logement (3), vers l'intérieur du panneau, latte ou lambris (1).

## Patentansprüche

1. Vorrichtung zum Zusammenfügen der Längsränder von Platten, Brettern oder Verkleidungen (1), ausgebildet aus zumindest einem vorspringenden Teil (2), mit dem ein Längsrand der Platten, Bretter oder Verkleidungen (1) ausgestattet ist, und aus zumindest einem Aufnahmeteil (3) mit korrespondierender Form, mit dem der andere Längsrand der Platten, Bretter oder Verkleidungen (1) ausgestattet ist, **dadurch gekennzeichnet, dass** sie zur Verteilung von Kräften vorgesehen ist, dass die Längsränder, die die vorspringenden Teile (2) und die Aufnahmeteile (3) tragen, sich entlang geneigter, paralleler Ebenen erstrecken, dass sie mit einem Mittel zur Selbstverriegelung, zur Selbstzusammenfügung und zum Halten in der Verwendungsposition versehen ist, welches in Form von mindestens einem Längsabsatz (4) vorliegt, der mindestens eine Kante der Leiste (2), die den vorspringenden Teil der Vorrichtung bildet, mit dem korrespondierenden Längsrand verbindet und mit einem weiteren Absatz (5) zusammenwirkt, der am korrespondierenden Rand vorgesehen ist, welcher den Aufnahmeteil (3) der Vorrichtung zum Zusammenfügen begrenzt, und dass der vorspringende Teil (2) in Form einer Längsleiste auf der Seite (4'), die zu jener entgegengesetzt ist, die den Absatz (4) bildet, einen bezüglich dieser Seite (4') seitlich vorstehenden Teil (6) aufweist und bezüglich der den vorspringenden Teil (2) tragenden, geneigten Oberfläche einen spitzen Winkel bildet, wobei dieser seitlich vorstehende Teil (6) mit einer Aussparung (7) der den Aufnahmeteil (3) bildenden Aufnahme zusammenwirkt.

2. Vorrichtung nach Anspruch 1, **dadurch gekennzeichnet, dass** die Zusammenfügung zwischen zwei aufeinanderfolgenden Platten, Brettern oder Verkleidungen (1) durch das Ende des vorspringenden Teils bewirkt wird.

3. Vorrichtung nach Anspruch 1, **dadurch gekennzeichnet, dass** die Zusammenfügung zwischen zwei aufeinanderfolgenden Platten, Brettern oder Verkleidungen (1) durch den vorspringenden Teil (2) und den Aufnahmeteil (3) bewirkt wird.

4. Vorrichtung nach Anspruch 1, **dadurch gekennzeichnet, dass** die zusammenfügung zwischen zwei aufeinanderfolgenden Platten, Brettern oder Verkleidungen (1) außerhalb der vertikalen Ebene, die den vorspringenden Teil (2) und den Aufnahmeteil (3) umfasst, bewirkt wird.

5. Vorrichtung nach Anspruch 1, **dadurch gekennzeichnet, dass** die vorspringenden Teile (2) in Form einer Längsleiste vorliegen, die im Wesentlichen in einem rechten Winkel bezüglich eines diese tragenden, ersten Längsrandes geneigt ist, und die Aufnahmeteile (3) in Form einer Aufnahme in korrespondierender Form vorliegen, die im anderen Längsrand vorgesehen ist und deren Neigung zu jener der Leiste, mit der der erste Längsrand ausgestattet ist, komplementär ist.

6. Vorrichtung nach Anspruch 1, **dadurch gekennzeichnet, dass** die Leiste, die den vorspringenden Teil (2) bildet, sich nach oben oder nach unten erstreckt und mit einer Lagerung (3) zusammenwirkt, die den Aufnahmeteil bildet.

7. Vorrichtung nach einem der Ansprüche 1 und 5, **dadurch gekennzeichnet, dass** der vorspringende Teil (2) und der Aufnahmeteil (3) in Form einer einfachen Leiste und Nut mit quadratischem oder rechteckigem Querschnitt ausgeführt sind, welche sich bezüglich der geneigten Längsränder der Platten, Bretter oder Verkleidungen (1) senkrecht erstrecken.

8. Vorrichtung nach Anspruch 1, **dadurch gekennzeichnet, dass** der vom vorspringenden Teil (2) seitlich vorstehende Teil (6) in Form eines Längsansatzes vorliegt, der einen Querschnitt aufweist, der sich vom Längsrand der Platte, des Brettes oder der Verkleidung (1) in Richtung des freien Endes des Längsansatzes verjüngt.

9. Vorrichtung nach einem der Ansprüche 1 und 6, **dadurch gekennzeichnet, dass** die Oberfläche (2') des vorspringenden Teils (2), welche die Seiten (4 und 4') oder die Seite (4) und die Außenkante des vom vorspringenden Teil (2) seitlich vorstehenden Teils (6) verbindet, vorzugsweise in Form einer ebenen Oberfläche vorliegt.

10. Vorrichtung nach einem der Ansprüche 1, 8 und 9, **dadurch gekennzeichnet, dass** der vom vorspringenden Teil (2) seitlich vorstehende Teil (6) mit dem Längsrand, der den vorspringenden Teil (2) trägt, verbunden ist durch eine Seite (4'), die zu diesem Längsrand im Wesentlichen senkrecht ist.

11. Vorrichtung nach einem der Ansprüche 1 und 8 bis 10, **dadurch gekennzeichnet, dass** der vom vorspringenden Teil (2) seitlich vorstehende Teil (6) mit dem Längsrand, der den vorspringenden Teil (2) trägt, direkt durch seine Fläche (6'), die zur Oberfläche (2') des vorspringenden Teils (2) entgegengesetzt ist, in einem spitzen Winkel verbunden ist.

12. Vorrichtung nach Anspruch 1, **dadurch gekennzeichnet, dass** der vorspringende Teil (2) und der Aufnahmeteil (3) zweifach vorgesehen sind, und an jedem Längsrand in benachbarter Weise ein vorspringender Teil (2) und ein Aufnahmeteil (3) angeordnet sind, die mit einem Aufnahmeteil (3) und einem vorspringenden Teil (2) des gegenüberliegenden Randes zusammenwirken, wobei diese vorspringenden Teile (2) und Aufnahmeteile (3) der zwei Ränder im Zickzack angeordnet sind und eine doppelte Zusammenfügung mit Nut und Leiste ausführen.

13. Vorrichtung nach einem der Ansprüche 1 bis 7 und 8 bis 12, **dadurch gekennzeichnet, dass** die Leiste und die Nut, die den vorspringenden Teil (2) und den Aufnahmeteil (3) bilden, aus gekrümmten Vorsprung- und Hohlelementen hergestellt sind, die sich ineinander einfügen und eine Positionsverriegelung der Platten, Bretter oder Verkleidungen (1) untereinander sicherstellen.

14. Vorrichtung nach Anspruch 1, **dadurch gekennzeichnet, dass** die geneigten, parallelen Ebenen, die die Längsränder bilden, welche den vorspringenden Teil (2) und den Aufnahmeteil (3) tragen, mit den oberen und unteren Oberflächen der Platten, Bretter oder Verkleidungen (1) durch Stoßkanten (1') dieser letzteren verbunden sind, welche sich senkrecht zu den oberen und unteren Oberflächen erstrecken.

15. Vorrichtung nach Anspruch 12, **dadurch gekennzeichnet, dass** die Stoßkanten (1') der oberen und unteren Oberflächen der Platten, Bretter oder Verkleidungen (1) direkt mit dem vorspringenden Teil (2) und dem Aufnahmeteil (3) verbunden sind, deren Basen und Stirnflächen in gegenseitigem Kontakt sich entlang geneigter, paralleler Ebenen erstrecken.

16. Vorrichtung nach einem der Ansprüche 1 bis 5, 7 und 8 bis 14, **dadurch gekennzeichnet, dass** zumindest einer der vorspringenden Teile (2) an seinem Ende, das in den korrespondierenden Aufnahmeteil (3) eindringt, mit einem Verriegelungselement (8) durch Zusammenwirken einer Form, die in eine korrespondierende Aufnahme (9) des Aufnahmeteils (3) einschnappt, versehen ist.

17. Vorrichtung nach Anspruch 16, **dadurch gekennzeichnet, dass** das Verriegelungselement (8) in Form einer elastischen Zunge gestaltet ist, die mit einer Rippe zur Rastverbindung versehen ist, welche mit der Aufnahme des Aufnahmeteils (3) zusammenwirkt.

18. Vorrichtung nach Anspruch 16, **dadurch gekennzeichnet, dass** das Verriegelungselement (8) in Form einer elastischen Lamelle gestaltet ist, die durch Ausbildung einer parallelen Längskerbe (8') im vorspringenden Teil (2) hergestellt wird, wobei diese Lamelle mit der Rippe zur Rastverbindung versehen ist, die mit der Aufnahme (9) des Aufnahmeteils (3) zusammenwirkt.

19. Vorrichtung nach einem der Ansprüche 1 bis 7 und 8 bis 15, **dadurch gekennzeichnet, dass** zumindest eine Kante (2") eines vorspringenden Teils (2) und der korrespondierende Winkel (3") des Zusammenwirkungs-Aufnahmeteils (3) in einer ebenen Oberfläche geschnitten sind, die sich zu der oberen und der unteren Oberfläche der Platten, Bretter oder Verkleidungen (1) parallel erstreckt.

20. Vorrichtung nach einem der Ansprüche 1 bis 7 und 12, **dadurch gekennzeichnet, dass** sie mit einer zweiten Gruppe aus vorspringendem Teil (2) und Aufnahmeteil (3) ergänzt ist, die gleichzeitig ein Mittel zur Selbstverriegelung, zur Selbstzusammenfügung und zum Halten in der Verwendungsposition bildet.

21. Vorrichtung nach Anspruch 20, **dadurch gekennzeichnet, dass** zumindest eine der Gruppen aus vorspringendem Teil (2) und Aufnahmeteil (3) abgerundete Formen aufweist.

22. Vorrichtung nach einem der Ansprüche 1 bis 7, 8 bis 12, 14 bis 16 und 20, **dadurch gekennzeichnet, dass** die vorspringenden Teile (2) und Aufnahmeteile (3), mit denen die Längsränder der Platten, Bretter oder Verkleidungen (1) ausgestattet sind, Seitenwände aufweisen, die in der Richtung einer Verjüngung des Querschnitts von der Basis zur Spitze der vorspringenden Teile und einer Aufweitung von der Basis zur Öffnung der Aufnahmeteile geneigt sind.

23. Vorrichtung nach einem der Ansprüche 1 bis 7, 8 bis 12, 14 bis 16 und 20, **dadurch gekennzeichnet, dass** die Verbindungskanten der spitzen Winkel, die den vorspringenden Teil (2) begrenzen, sowie der spitzen Winkel, die die Aufnahme begrenzen, die den Aufnahmeteil (3) bildet, leicht abgerundet oder gefast sind.

24. Vorrichtung nach einem der Ansprüche 14 und 15, **dadurch gekennzeichnet, dass** die Stoßkanten (1') die die geneigten, parallelen Ebenen, welche die Längsränder bilden, die den vorspringenden Teil (2) und den Aufnahmeteil (3) tragen, an der oberen Oberfläche der Platten, Bretter oder Verkleidungen (1) verbinden und sich senkrecht zu der oberen Oberfläche erstrecken, jeweils mit einer Längsaufnahme (10) versehen sind, die entlang der oberen Oberfläche teilweise offen ist und jeweils mit der Aufnahme (10) des Längsrandes der benachbarten Platte, des benachbarten Brettes oder der benachbarten Verkleidung (1) eine Nut (11) zur Aufnahme eines Dichtungselements (12) in Form eines Kitts, eines Stabes oder eines Analogen begrenzt.

25. Vorrichtung nach Anspruch 24, **dadurch gekennzeichnet, dass** die Aufnahmen (10) der Längsränder der Platten, Bretter oder Verkleidungen (1) eine zum Inneren der Platten, Bretter oder Verkleidungen (1) aufgeweitete Form aufweisen, die das Erhalten von Nuten (11) ermöglicht, die sich zum Inneren der Montage von zusammengefügten Platten, Bretter oder Verkleidungen (1) aufweiten.

26. Vorrichtung nach einem der Ansprüche 1 bis 7, 12 und 13, **dadurch gekennzeichnet, dass** zumindest ein vorspringender Teil (2) von einer der geneigten, parallelen Ebenen, die die Längsränder der Platten, Bretter oder Verkleidungen (1) bilden, mit einem Verriegelungsmittel (13) in Form einer Längsnut versehen ist, die mit einem Mittel mit Zusammenwirkungsform (14) des korrespondierenden Aufnahmeteils (3) zusammenwirkt, welches aus einer Längsrippe besteht, wobei das Zusammenfügen der Baugruppe durch plastische Verformung der Verriegelungsmittel (13 und 14) bewirkt wird.

27. Vorrichtung nach einem der Ansprüche 1 bis 7, 12, 13 und 26, **dadurch gekennzeichnet, dass** zumindest ein Paar aus Aufnahme (3) - vorspringendem Teil (2) des Verbunds mit mindestens einem komplementären Verriegelungsmittel (15) in Form eines Längsvorsprungs und einer korrespondierenden Aufnahme ergänzt ist.

28. Vorrichtung nach einem der Ansprüche 1 bis 7, 12, 19, 20, 22 und 23, **dadurch gekennzeichnet, dass** die Enden der vorspringenden Teile (2) und der Boden der Aufnahmen, die die Aufnahmeteile (3) bilden, eine Fläche aufweisen, die zu jener der oberen und der unteren Fläche der Platten, Bretter oder Verkleidungen (1) parallel ist.

29. Vorrichtung nach einem der Ansprüche 12, 13, 15, 16, 19, 20, 22, 23 und 26 bis 28, **dadurch gekennzeichnet, dass** die vorspringenden Teile (2) ein und derselben geneigten Ebene sich in entgegengesetzte Richtungen erstrecken.

30. Vorrichtung nach Anspruch 23, **dadurch gekennzeichnet, dass** die Eingangskanten der Aufnahmen, die den oder die Aufnahmeteil(e) (3) bilden, von zumindest einer der geneigten, parallelen Ebenen, die die Längsränder der Platten, Bretter oder Verkleidungen (1) bilden, sowie die korrespondierenden Kanten des vorspringenden Teils oder der vorspringenden Teile (2) der anderen geneigten Ebene jeweils mit einer geneigten Längsrampe (31, 21) versehen sind, die eine Trichtererweiterung am Eingang des Aufnahmeteils oder der Aufnahmeteile (3) bzw. eine Aufweitung, die von der Spitze des vorspringenden Teils oder der vorspringenden Teile (2) ausgeht, bildet, wobei diese geneigten Längsrampen (31 und 21) an den Kanten der korrespondierenden Aufnahmeteile (3) und vorspringenden Teile (2) vorgesehen sind, die von einem Zusammenfügungsdrehpunkt (A) zwischen zwei Platten, Brettern oder Verkleidungen (1) am weitesten entfernt sind.

31. Vorrichtung nach Anspruch 30, **dadurch gekennzeichnet, dass** die Enden der Rampe(n) (21), die an den vorspringenden Teilen (2) vorgesehen sind, bezüglich des Zusammenfügungsdrehpunkts (A) zwischen zwei Platten, Brettern oder Verkleidungen (1) einen Abstand oder einen Radius aufweisen, der von der Spitze der vorspringenden Teile (2) zu ihrem unteren Verbindungsende am korrespondierenden Längsrand zunimmt.

32. Vorrichtung nach Anspruch 30, **dadurch gekennzeichnet, dass** die Enden der Rampe(n) (31), die am Eingang des Aufnahmeteils oder der Aufnahmeteile (3) vorgesehen sind, bezüglich des Zusammenfügungsdrehpunkts (A) zwischen zwei Platten, Brettern oder Verkleidungen (1) einen Abstand oder Radius aufweisen, der vom Eingang der Aufnahmeteile (3) zum Boden dieser abnimmt.

33. Vorrichtung nach Anspruch 1, **dadurch gekennzeichnet, dass** die geneigten Ebenen, die die Längsränder der Platten, Bretter oder Verkleidungen (1) bilden, in mindestens zwei Ebenenteile unterteilt sind, die parallel sind oder nicht, versetzt sind und jeweils mit einer Verbindungskante eines vorspringenden Teils (2) oder eines Aufnahmeteils (3) verbunden sind.

34. Vorrichtung nach einem der Ansprüche 1 bis 7, 12, 13 und 26, **dadurch gekennzeichnet, dass** zwei vorspringenden Teile (2) von zwei geneigten, parallelen Ebenen, die die Längsränder der Platten, Bretter oder Verkleidungen (1) bilden, jeweils mit einem Verriegelungsmittel (13', 13") versehen sind, und zwar in Form einer Längsnut (13'), die am oberen vorspringenden Teil (2) vorgesehen ist und die mit einem Mittel in Zusammenwirkungsform (14') zusammenwirkt, welches aus einer Längsrippe des korrespondierenden Aufnahmeteils (3) besteht, bzw. einer Längsrippe (13"), die unter dem unteren vorspringenden Teil (2) vorgesehen ist und die mit einem Mittel in Zusammenwirkungsform (14") zusammenwirkt, welches aus einer Längsnut des korrespondierenden Aufnahmeteils (3) besteht.

35. Vorrichtung nach Anspruch 1, **dadurch gekennzeichnet, dass** die Eingangkanten der Aufnahmen, die den oder die Aufnahmeteil(e) (3) der geneigten, parallelen Ebenen bilden, welche die Längsränder der Platten, Bretter oder Verkleidungen (1) bilden, in ein und derselben vertikalen Ebene angeordnet sind und einen Verriegelungsteil (301) aufweisen, der vollständig im Inneren der Aufnahmen (3) hinter der vertikalen Ebene angeordnet ist.

36. Vorrichtung nach Anspruch 35, **dadurch gekennzeichnet, dass** die untere Kante der unteren Aufnahme (3) durch eine vertikale Ebene direkt mit der unteren Fläche der Platte, des Brettes oder der Verkleidung (1) verbunden ist.

37. Vorrichtung nach Anspruch 1, **dadurch gekennzeichnet, dass** die untere Kante, die die untere Aufnahme (3) begrenzt, bezüglich der vertikalen Ebene, die durch die obere Kante der Aufnahme (3) verläuft, zum Inneren der Platte, des Brettes oder der Verkleidung (1) hin vertieft angeordnet ist.

## Claims

1. Device for assembling longitudinal edges of panels, laths or wainscots (1), consisting of at least one male part (2) provided on a longitudinal edge of said panels, laths or wainscots (1) and of at least one female part (3) of corresponding shape provided on the other longitudinal edge of said panels, laths or wainscots (1), **characterised in that** it provides force distribution, **in that** the longitudinal edges bearing the male (2) and female (3) parts extend along parallel oblique planes, **in that** it is equipped with a means for self-locking, self-jointing and maintenance in the service position in the form of at least one longitudinal shoulder (4) connecting at least one ridge of the tongue (2) forming the male part of the device to the corresponding longitudinal edge and cooperating with a further shoulder (5) provided on the corresponding edge delimiting the female part (3) of the assembly device and **in that** the male part (2) in the form of a longitudinal tongue has, on the side (4') remote from the side forming the shoulder (4), a part which projects laterally from this side (4') and forms an acute angle to the oblique surface bearing the male part (2), this laterally projecting part (6) cooperating with a notch (7) in the recess forming the female part (3).

2. Device according to claim 1, **characterised in that** the joint between two successive panels, laths or wainscots (1) is made in line with the end of the male part.

3. Device according to claim 1, **characterised in that** the joint between two successive panels, laths or wainscots (1) is made in line with the end of the male (2) and female (3) parts.

4. Device according to claim 1, **characterised in that** the joint between two successive panels, laths or wainscots (1) is made outside the vertical plane comprising the male (2) and female (3) parts.

5. Device according to claim 1, **characterised in that** the male (2) and female (3) parts are each in the form of a longitudinal tongue inclined substantially at right angles to a first longitudinal edge bearing it and a recess of corresponding shape provided in the other longitudinal edge and of which the inclination is complementary with that of the tongue provided on the first longitudinal edge.

6. Device according to claim 1, **characterised in that** the tongue forming the male part (2) extends upwardly or downwardly and cooperates with a recess (3) forming the female part.

7. Device according to any one of claims 1 and 5, **characterised in that** the male (2) and female (3) parts are produced in the form of a simple tongue and groove of square or rectangular section extending perpendicularly to the oblique longitudinal edges of the panels, laths or wainscots (1).

8. Device according to claim 1, **characterised in that** the laterally projecting part (6) of the male part (2) is in the form of a longitudinal attachment having a cross-section which tapers from the longitudinal edge of the panel, lath or wainscot (1) in the direction of the free end of said longitudinal attachment.

9. Device according to any one of claims 1 and 6, **characterised in that** the surface (2') of the male part (2) connecting the sides (4 and 4') or the side (4) of the external ridge of the part (6) projecting laterally from the male part (2) is preferably in the form of a plane surface.

10. Device according to any one of claims 1, 8 and 9, **characterised in that** the laterally projecting part (6) of the male part (2) is connected to the longitudinal edge bearing said male part (2) by a side (4') which is substantially perpendicular to this longitudinal edge.

11. Device according to any one of claims 1 and 8 to 10, **characterised in that** the laterally projecting part (6) of the male part (2) is connected to the longitudinal edge bearing said male part (2) directly by its face (6') remote from the surface (2') of the male part (2) at an acute angle.

12. Device according to claim 1, **characterised in that** the male (2) and female (3) parts are doubled and, on each longitudinal edge are disposed, in an adjacent manner, a male part (2) and a female part (3) cooperating with a female part (3) and a male part (2) on the opposing edge, these male (2) and female (3) parts of two edges being staggered and producing a double tongue and groove assembly.

13. Device according to any one of claims 1 to 7 and 8 to 12, **characterised in that** the tongue and groove forming the male (2) and female (3) parts are produced by male and female curvilinear elements which fit together and lock the panels, laths or wainscots (1) together in position.

14. Device according to claim 1, **characterised in that** the parallel oblique planes forming the longitudinal edges bearing the male (2) and female (3) parts are connected to the upper and lower surfaces of the panels, laths or wainscots (1) via the ledges (1') thereof which extend perpendicularly to said upper and lower surfaces.

15. Device according to claim 12, **characterised in that** the ledges (1') of the upper and lower surfaces of the panels, laths or wainscots (1) are directly connected to the male (2) and female (3) parts of which the bases and end faces in mutual contact extend in parallel oblique planes.

16. Device according to any one of claims 1 to 5, 7 and 8 to 14, **characterised in that** at least one of the male parts (2) is provided, at its end penetrating the corresponding female part (3), with an interlocking element (8) which fits in a corresponding recess (9) of said female part (3).

17. Device according to claim 16, **characterised in that** the locking element (8) is made in the form of an elastic tongue equipped with a latching rib which cooperates with the recess in the female part (3).

18. Device according to claim 16, **characterised in that** the locking element (8) is made up in the form of an elastic blade produced by forming a longitudinal parallel slot (8') in the male part (2), this blade being provided with the latching rib cooperating with the recess (9) in the female part (3).

19. Device according to any one of claims 1 to 7 and 8 to 15, **characterised in that** at least one ridge (2") of a male part (2) and the corresponding angle (3") of the cooperating female part (3) are intersected by a plane surface extending in parallel with the upper and lower surfaces of the panels, laths or wainscots (1).

20. Device according to any one of claims 1 to 7 and 12, **characterised in that** it is completed by a second set of male (2) and female (3) parts which simultaneously form a means for self-locking, self-jointing and maintenance in the service position.

21. Device according to claim 20, **characterised in that** at least one of the sets of male (2) and female (3) parts has rounded shapes.

22. Device according to any one of claims 1 to 7, 8 to 12, 14 to 16 and 20, **characterised in that** male (2) and female (3) parts provided on the longitudinal edges of the panels, laths or wainscots (1) have lateral walls inclined in the sense of a taper of the section from the base toward the top of the male parts and in the sense of a flare from the base toward the opening of the female parts.

23. Device according to any one of claims 1 to 7, 8 to 12, 14 to 16 and 20, **characterised in that** the ridges connecting the acute angles delimiting the male part (2), as well as the acute angles delimiting the recess forming the female part (3) are slightly rounded or bevelled.

24. Device according to any one of claims 14 and 15, **characterised in that** the ledges (1') connecting the parallel oblique planes forming the longitudinal edges bearing the male (2) and female (3) parts to the upper surface of the panels, laths or wainscots (1) and extending perpendicularly to said upper surface are each provided with a longitudinal recess (10) which is partially open along said upper surface and each defining, with the recess (10) of the adjoining longitudinal edge of the panel, lath or wainscots (1), a furrow (11) for receiving a joint detail (12) in the form of a mastic, a bead or the like.

25. Device according to claim 24, **characterised in that** the recesses (10) in the longitudinal edges of the panels, laths or wainscots (1) have a shape which flares toward the interior of said panels, laths or wainscots (1) for producing furrows (11) which flare toward the interior of the installation comprising assembled panels, laths or wainscots (1).

26. Device according to any one of claims 1 to 7, 12 and 13, **characterised in that** at least one male part (2) of one of the parallel oblique planes forming the longitudinal edges of the panels, laths or wainscots (1) is provided with a locking means (13) in the form of a longitudinal groove which cooperates with a means of cooperating shape (14) of the corresponding female part (3), consisting of a longitudinal rib, the set being assembled by plastic deformation of the locking means (13 and 14).

27. Device according to any one of claims 1 to 7, 12, 13 and 27, **characterised in that** at least one pair consisting of recess (3) and male part (2) of the assembly is completed by at least one complementary locking means (15) in the form of a longitudinal projection and a corresponding recess.

28. Device according to any one of claims 1 to 7, 12, 19, 20, 22 and 23, **characterised in that** the ends of the male parts (2) and the bottom of the recesses forming the female parts (3) have a face parallel to that of the upper and lower faces of the panels, laths or wainscots (1).

29. Device according to any one of claims 12, 13, 15, 16, 19, 20, 22, 23 and 26 to 28,
**characterised in that** the male parts (2) in a same oblique plane extend in opposite directions.

30. Device according to claim 23, **characterised in that** the entry ridges of the recesses forming the female part(s) (3) of at least one of the parallel oblique planes forming the longitudinal edges of the panels, laths or wainscots (1) as well as the corresponding ridges of the male part(s) (2) of the other oblique plane are each provided with an inclined longitudinal ramp (31, 32) forming a respective funnel-shaped enlargement at the inlet of the female part(s) (3) and a flare from the top of the male part(s) (2), these inclined longitudinal ramps (31 and 21) being provided on the ridges of the corresponding female (3) and male (2) parts furthest removed from an assembly pivot point (A) between two panels, laths or wainscots (1).

31. Device according to claim 30, **characterised in that** the ends of the ramp(s) (21) provided on the male parts (2) have, relative to the assembly pivot point (A) between two panels, laths or wainscots (1), a distance or a radius which increases from the top of said male parts (2) toward the bottom where they are connected to the corresponding longitudinal edge.

32. Device according to claim 30, **characterised in that** the ends of the ramp(s) (31) provided at the entrance of the female part(s) (3) have, relative to the assembly pivot point (A) between two panels, laths or wainscots (1), a distance or radius which decreases from the entrance of said female parts (3) toward the bottom thereof.

33. Device according to claim 1, **characterised in that** the oblique planes forming the longitudinal edges of the panels, laths or wainscots (1) are subdivided into at least two plane portions, which are parallel or non-parallel, offset and each attached to a connecting ridge of a male part (2) or a female part (3).

34. Device according to any one of claims 1 to 7, 12, 13 and 26, **characterised in that** two male parts (2) of two parallel oblique planes forming the longitudinal edges of the panels, laths or wainscots (1) are each provided with a locking means (13', 13") in the form of a respective longitudinal groove (13') provided on the upper male part (2) which cooperates with a means of cooperating shape (14') consisting of a longitudinal rib of the corresponding female part (3) and of a longitudinal rib (13") provided on the lower male part (2) cooperating with a means of cooperating shape (14") consisting of a longitudinal groove of the corresponding female part (3).

35. Device according to claim 1, **characterised in that** the entry ridges of the recesses forming the female part(s) (3) of the parallel oblique planes forming the longitudinal edges of the panels, laths or wainscots (1) are disposed in the same vertical plane and have a locking part (301) located entirely inside the recesses (3) behind said vertical plane.

36. Device according to claim 35, **characterised in that** the lower ridge of the lower recess (3) is directly connected by a vertical plane to the lower face of the panel, lath or wainscot (1).

37. Device according to claim 1, **characterised in that** the lower ridge delimiting the lower recess (3) is set back from the vertical plane passing through the upper ridge of said recess (3) toward the interior of the panel, lath or wainscot (1).
